# EUROPEAN PATENT APPLICATION

(11) **EP 3 680 529 A1**
(43) Date of publication of application: **15.07.2020**
(21) Application number: 18917037.6
(22) Date of filing: 12.11.2018
(51) Int. Cl.: F16K 27/00, F16K 11/22, F16K 27/02, F16K 31/40, F16K 31/50, F16K 39/02, F16K 11/24, F16K 37/00, B60H 1/00

(54) **COMPOSITE VALVE**

(71) Applicant: Pacific Industrial Co., Ltd., Ogaki-shi, Gifu 503-8603 (JP)
(72) Inventor: KANAMORI, Kazuhiro, Ogaki-shi, Gifu-ken 503-8603 (JP); NAKAYAMA, Koji, Ogaki-shi, Gifu-ken 503-8603 (JP); MITSU, Terumasa, Ogaki-shi, Gifu-ken 503-8603 (JP)
(74) Representative: Kramer Barske Schmidtchen Patentanwälte PartG mbB
(86) International application number: PCT/JP2018/041874
(87) International publication number: WO 2020/100201

(57) **Abstract**

To reduce the number of assembling steps and to minimize the risk of leakage of a fluid.

A composite valve (10) includes a plurality of valves (30, 40) in which valve bodies (31, 41) each linearly move. The composite valve (10) includes: a body (11) shared by the plurality of valves (30, 40); a plurality of parallel holes (21, 22) bored at a plurality of positions in the body (11) to extend in parallel to each other; a plurality of valve ports (25, 26) formed by the plurality of parallel holes (21, 22) having their respective intermediate portions narrowed; a plurality of valve chambers (23, 24) included in one side portion in the plurality of parallel holes (21, 22) relative to the valve ports (25, 26), to respectively house the valve bodies (31, 41); a plurality of first ports (15) including the other side portion in the plurality of parallel holes (21, 22) relative to the valve ports (25, 26), one ends of the first ports (15) opening at an outer surface of the body (11); a communication hole (27) crossing the plurality of valve chambers (23, 24); and a second port (16) crossing a portion between the valve chambers (23, 24) in the communication hole (27), one end of the second port (16) opening at the outer surface of the body (11).

## Description

### TECHNICAL FIELD

The present disclosure relates to a composite valve including a plurality of valves.

### BACKGROUND ART

Patent Document 1 describes a structure in which a plurality of valves are connected to each other via pipes and joints.

### RELATED ART DOCUMENTS

### PATENT DOCUMENTS

Patent Document 1: Japanese Unexamined Patent Application Publication No. 2016-107745 (paragraph [0045], FIG. 1)

### SUMMARY OF THE INVENTION

### PROBLEMS TO BE SOLVED BY THE INVENTION

Since a structure including a plurality of valves such as that disclosed in Patent Document 1 includes a multitude of portions where the valves, pipes, and joints are connected, the connecting work and sealing work are troublesome. Additionally, there exists high risk of leakage of the fluid. Therefore, what are demanded of such a structure including a plurality of valves are the reduced number of assembling steps and minimized risk of leakage of a fluid.

### MEANS OF SOLVING THE PROBLEMS

One aspect of the invention according to claim 1 to solve the above problem is a composite valve including a plurality of valves in which valve bodies each linearly move, the composite valve includes a body shared by the plurality of valves, a plurality of parallel holes bored at a plurality of positions in the body to extend in parallel to each other, a plurality of valve ports formed by narrowing the plurality of parallel holes at their respective intermediate portions, a plurality of valve chambers included in one side portion in the plurality of parallel holes relative to the valve ports, to respectively house the valve bodies, a plurality of first ports including another side portion in the plurality of parallel holes relative to the valve ports, one ends of the first ports opening at an outer surface of the body, a communication hole crossing the plurality of valve chambers, and a second port crossing a portion between the valve chambers in the communication hole, one end of the second port opening at the outer surface of the body.

### BRIEF DESCRIPTION OF THE DRAWINGS

FIG. 1 is a perspective view of a composite valve according to a first embodiment of the present disclosure.
FIG. 2 is a bottom view of the composite valve.
FIG. 3 is a cross-sectional view taken along line A-A of the composite valve.
FIG. 4 is an enlarged cross-sectional view of a solenoid valve in an open state.
FIG. 5 is an enlarged cross-sectional view of an expansion valve in an open state.
FIG. 6 is an enlarged cross-sectional view of a filter.
FIG. 7 is a perspective view of a composite valve according to a second embodiment.
FIG. 8 is a bottom view of the composite valve.
FIG. 9 is a cross-sectional view taken along line B-B of the composite valve.
FIG. 10 is a perspective view of a composite valve according to a third embodiment.
FIG. 11 is a bottom view of the composite valve.
FIG. 12 is a cross-sectional view taken along line C-C of the composite valve.

### MODE FOR CARRYING OUT THE INVENTION

### [First embodiment]

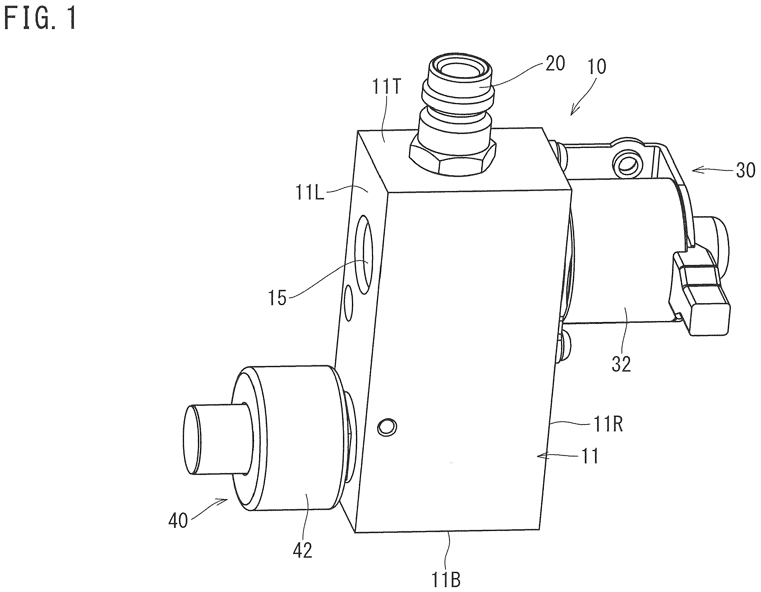

In the following, with reference to FIGS. 1 to 6, a description will be given of a composite valve 10 according to the present embodiment. The composite valve 10 according to the present embodiment shown in FIG. 1 is, for example, provided at a refrigerant circuit of a vehicle air conditioner and connected to pipes.

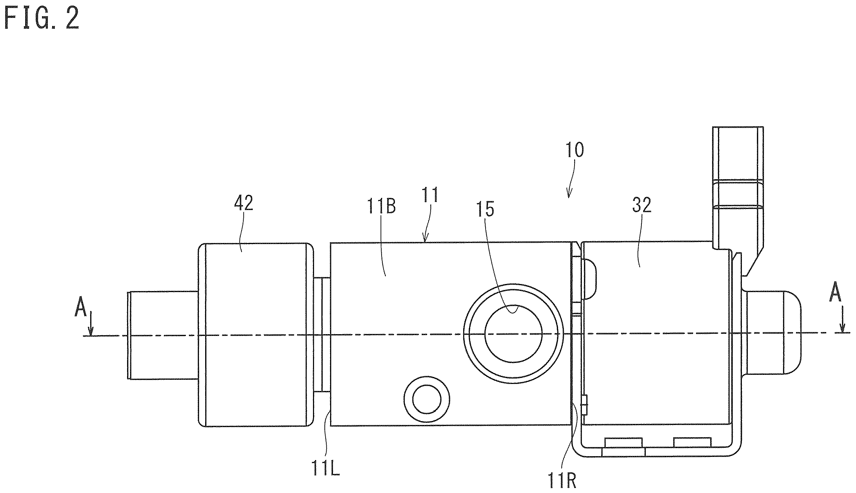

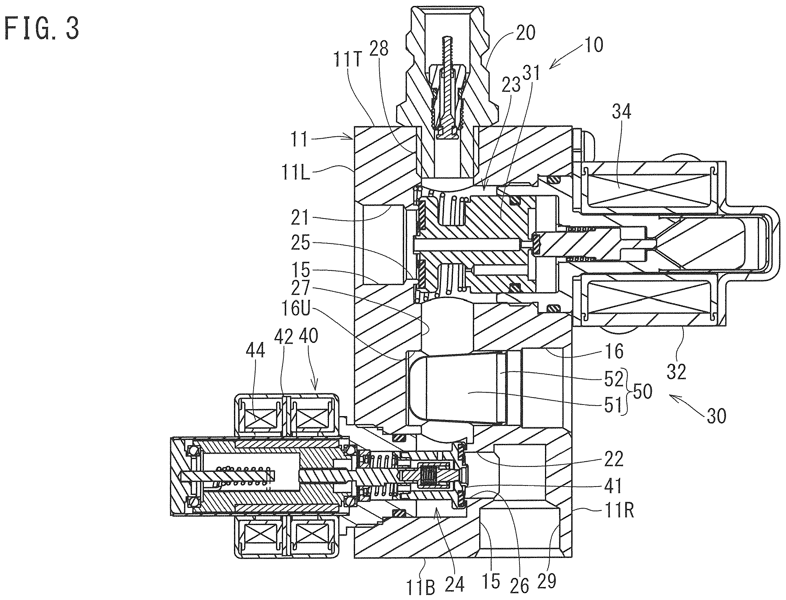

As shown in FIGS. 1 and 2, the composite valve 10 includes a vertically elongated rectangular body 11, and includes a plurality of valve bodies in a channel provided in the body 11. Note that, in the present embodiment, when the composite valve 10 is in operation (that is, when the composite valve 10 is connected to a connection target such as any pipes or connection devices), the body 11 is disposed such that its longitudinal direction is aligned in the top-bottom direction (the vertical direction). Hereinafter, in the body 11, a surface facing vertically upward in operation is referred to as an upper surface 11T, and a surface facing vertically downward in operation is referred to as a lower surface 11B. Further, in FIG. 3, the direction perpendicular to the paper surface is referred to as the front-rear direction, and the lateral direction is referred to as the right-left direction. In the outer surface of the body 11, surfaces facing the left and right sides are respectively referred to as a left surface 11L and a right surface 11R.

As shown in FIG. 3, the body 11 includes a first parallel hole 21 and a second parallel hole 22 extending in the right-left direction in parallel to each other. The first and second parallel holes 21, 22 are perpendicular to the left surface 11L, and substantially identical to each other in the position in the front-rear direction. The first parallel hole 21 is positioned above the second parallel hole 22, and penetrates through the body 11. One end of the first parallel hole 21 opens at the left surface 11L of the body 11, and the other end of the first parallel hole 21 opens at the right surface 11R of the body 11. One end of the second parallel hole 22 opens at the left surface 11L of the body 11, and the other end of the second parallel hole 22 extends to a position near the right end of the body 11, to be perpendicular to a lower perpendicular hole 29 which opens at the lower surface 11B of the body 11.

The body 11 is formed by, for example, boring a plurality of holes such as the parallel holes 21, 22 in a rectangular member. Such a rectangular member may be formed of, for example, resin or metal, by integral molding, integral casting, forging, or the like.

The first and second parallel holes 21, 22 have their intermediate portions narrowed to be a first valve port 25 and a second valve port 26, respectively. In the present embodiment, the first valve port 25 is disposed on the left side relative to the second valve port 26. Note that the first valve port 25 may be formed of a member attached to an inner surface of the first parallel hole 21 to project from the inner surface. The same holds true for the second valve port 26.

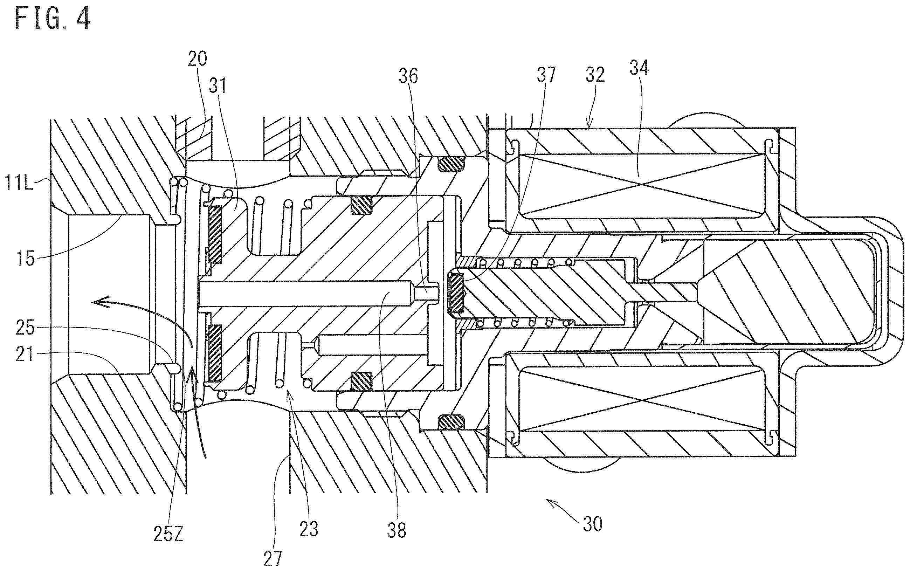

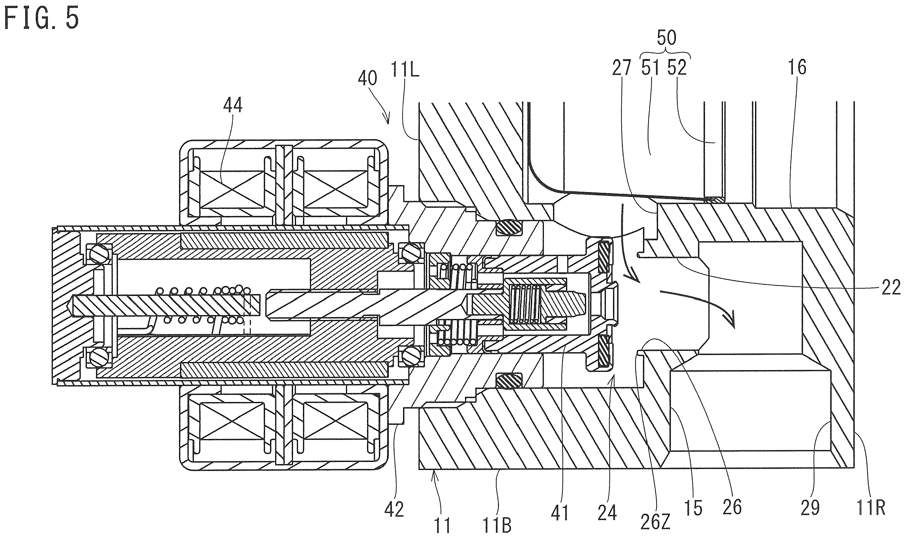

The parallel holes 21, 22 are provided with a first valve body 31 and a second valve body 41 configured to open and close the first valve port 25 and the second valve port 26, respectively. Specifically, the first valve body 31 is disposed on the right side relative to the first valve port 25, and linearly moves in the extending direction of the first parallel hole 21 (that is, the right-left direction) to be positioned at a close position (see FIG. 3) for closing the valve port 25 and at an open position (see FIG. 4) for opening the first valve port 25. The second valve body 41 is disposed on the left side relative to the second valve port 26, and linearly moves in the extending direction of the second parallel hole 22 (that is, the right-left direction) to be positioned at a close position (see FIG. 3) for closing the valve port 26 and at an open position (see FIG. 5) for opening the second valve port 26. That is, in the present embodiment, the first valve body 31 and the second valve body 41 shift in parallel to each other.

The first and second parallel holes 21, 22 are provided with a first valve chamber 23 and a second valve chamber 24 linearly movably housing the first valve body 31 and the second valve body 41, respectively. Specifically, the first valve chamber 23 is configured of a radially enlarged part in the first parallel hole 21, which part has its diameter enlarged on the right side relative to the first valve port 25 to extend to the right surface 11R. The right end of the first valve chamber 23 is closed by a first valve body holder 32 functioning as a lid member fitting to the outer surface opening at the right end of the first parallel hole 21. The second valve chamber 24 is configured of a radially enlarged part in the second parallel hole 22, which part has its diameter enlarged on the left side relative to the second valve port 26 to extend to the left surface 11L. The left end of the second valve chamber 24 is closed by a second valve body holder 42 functioning as a lid member fitting to the outer surface opening at the left end of the second parallel hole 22. The first and second valve body holders 32, 42 linearly movably hold the first valve body 31 and the second valve body 41, respectively. The first and second valve body holders 32, 42 include therein mechanisms (for example, electromagnetic coils 34, 44 or the like) for shifting the valve bodies 31, 41, respectively, and protrude from the body 11.

A straight-type channel extending on the left side from the first valve port 25 in the first parallel hole 21, and an elbow-type channel configured of the right portion relative to the second valve port 26 and a lower perpendicular hole 29 in the second parallel hole 22, serve as a pair of first ports 15 to be connected to a connection target being any pipe or connection device (see FIGS. 2 and 3). Note that, the pair of first ports 15 may both be straight-type channels or may both be elbow-type channels.

As shown in FIG. 3, the body 11 is provided with a communication hole 27 perpendicular to the first and second parallel holes 21, 22 (specifically, perpendicular to the first and second valve chambers 23, 24). The communication hole 27 extends in the top-bottom direction, and is disposed in parallel to the left surface 11L and the right surface 11R. The upper end of the communication hole 27 opens at the upper surface 11T of the body 11, and the lower end of the communication hole 27 extends to the second parallel hole 22. The first valve port 25 and the second valve port 26 respectively open at a left side portion and a right side portion in the inner surface of the communication hole 27. At the opening edges of the first valve port 25 and the second valve port 26, valve seats 25Z, 26Z on which the first valve body 31 and the second valve body 41 abut are formed, respectively (see FIGS. 4 and 5).

At the upper end of the communication hole 27 opening at the body 11, a mount part 28 for mounting a sensor or a check valve is formed. A sensor to be mounted on the mount part 28 may be, for example, a pressure sensor, a temperature sensor, a dust sensor, or the like. A check valve to be attached to the mount part 28 may be a charge valve, a relief valve, or the like. Note that, the mount part 28 includes, for example, a female screw part which is screwed with a male screw part provided at such a sensor or a check valve. In the present embodiment, on the mount part 28, a charge valve 20 for charging the communication hole 27 with a fluid is mounted.

The body 11 is provided with a second port 16 which is configured of a lateral hole perpendicular to the communication hole 27 and parallel to the first and second parallel holes 21, 22. One end of the second port 16 communicates with a portion in the communication hole 27 between the first valve chamber 23 and the second valve chamber 24. The other end of the second port 16 opens at the right surface 11R of the body. The second port 16 is connected to the connection target being any pipe or connection device (see FIGS. 2 and 3). One end (the left end) of the second port 16 extends on the left side relative to the communication hole 27, to serve as a circular recessed part 16U.

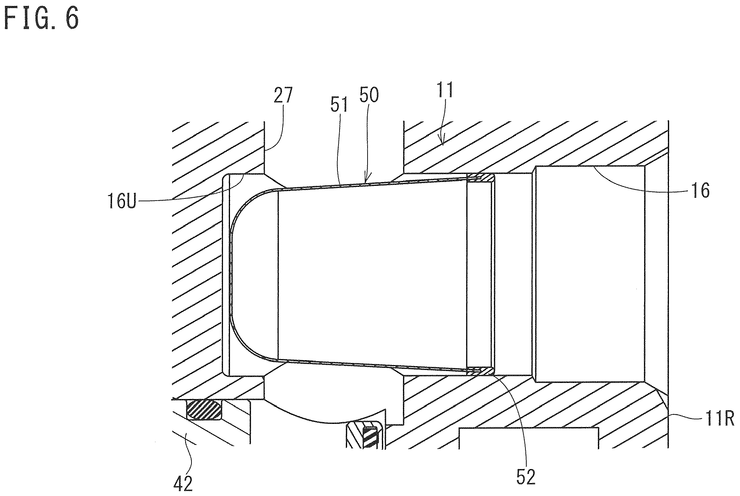

As shown in FIG. 6, inside the second port 16, a filter 50 is fitted. Specifically, the filter 50 includes a filter body 51 which is cylindrical, whose one end is bottomed and the other end is open, and is axially elongated. The filter 50 includes a fit ring 52 fixed at the other end of the filter body 51. The fit ring 52 radially externally protrude from the filter body 51 over the entire circumference. The fit ring 52 abuts on the inner surface of the second port 16, and retains the filter body 51 to be spaced apart from the inner surface of the second port 16. One end of the filter body 51 is accommodated in the circular recessed part 16U, and the fit ring 52 is disposed on the right side relative to the communication hole 27 in the second port 16.

In the present embodiment, the first valve body 31, the first valve body holder 32, and the body 11 constitute a solenoid valve 30. The second valve body 41, the second valve body holder 42, and the body 11 constitute an expansion valve 40. That is, in the composite valve 10, a plurality of valves (the solenoid valve 30 and the expansion valve 40) share the body 11. The solenoid valve 30 is of the pilot type, and includes a pilot hole 36, a pilot valve body 37, and a communication path 38. The pilot hole 36 penetrates through the first valve body 31 in the linear motion direction, to communicate with the first valve port 25. The pilot valve body 37 linearly moves coaxially to the first valve body 31 by the electromagnetic coil 34 (see FIG. 4), and opens and closes the pilot hole 36 from the side opposite to the first valve port 25. The communication path 38 penetrates through the first valve body 31. When the pilot valve body 37 leaves the pilot hole 36, the communication path 38 establishes communication between the opening opposite to the first valve port 25 in the pilot hole 36 and the communication hole 27.

Note that, in the present embodiment, the second port 16 functions as an input port for a fluid such as a refrigerant to flow in, and the first port 15 functions as an output port for the fluid to flow out. The fluid from the second port 16 flows into the communication hole 27 via the side surface of the filter 50 (specifically, the side surface of the filter body 51). Thereafter, the fluid passes through one of the first valve port 25 and the second valve port 26 which one valve port is opened by the solenoid valve 30 and the expansion valve 40, and flows out from the body 11 via the first port 15.

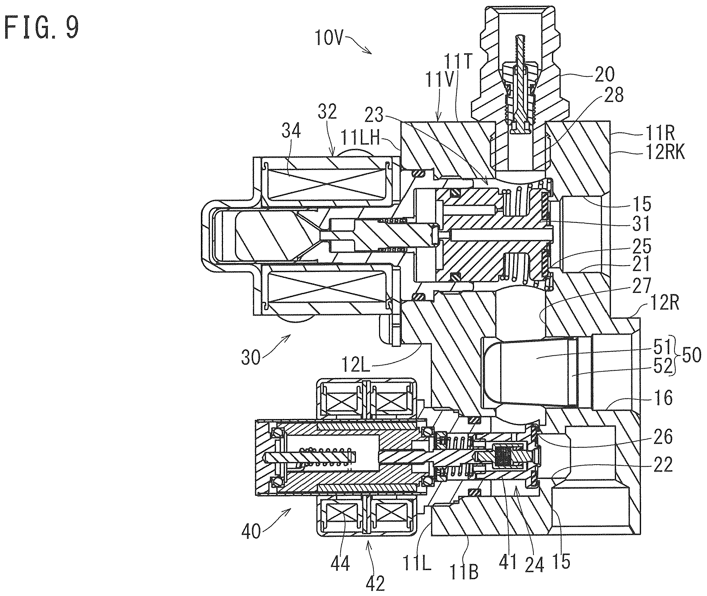

In the present embodiment, the solenoid valve 30 and the expansion valve 40 are different from each other in the length by which they are inserted into the first and second parallel holes 21, 22, respectively. Therefore, the first and second parallel holes 21, 22 must be different from each other in the depth from the outer surface of the body 11 to the first valve port 25 and from the outer surface to the second valve port 26, respectively. Here, as in the present embodiment, in the case where the first valve port 25 and the second valve port 26 are provided using the inner surface of the communication hole 27, in providing the first and second parallel holes 21, 22 at the same surface of the body 11 (the left surface 11L or the right surface 11R), the right-left direction positions of the holes must be displaced from each other by, for example, providing a step part between the portions where the holes are formed (see a second embodiment, which will be described later, and FIG. 9). In this point, in the present embodiment, the first parallel hole 21 and the second parallel hole 22 open respectively at opposite surfaces (the right surface 11R and the left surface 11L). Thus, the above-described step part at the outer surface of the body 11 can be dispensed with, and the shape of the body 11 can be a simple shape such as a rectangular parallelepiped. This facilitates manufacturing the body 11 of the composite valve 10 according to the present embodiment.

In the composite valve 10 according to the present embodiment, a plurality of valves share the body 11, and the valve chambers 23, 24 respectively housing the valve bodies 31, 41 communicate with each other via the communication hole 27 in the body 11. Therefore, a conventional joint or pipe connecting between a plurality of valves 31, 41 can be dispensed with, contributing to reducing the number of assembling steps and minimizing the risk of leakage of the fluid. Furthermore, while a structure including the valve bodies 31, 41 that linearly move is greater in general in the dimension in the linear motion direction of the valve bodies 31, 41, the plurality of valve bodies 31, 41 according to the present embodiment shift parallel to each other, contributing to downsizing the composite valve 10.

In the composite valve 10 according to the present embodiment, the opening formed in boring the communication hole 27 at the outer surface of the body 11 is used as the mount part 28 for mounting any sensor or check valve. Thus, as compared to the structure in which the opening of the communication hole 27 is simply closed, the opening of the communication hole 27 can be effectively used. In this case, the mount part 28 may be disposed at the surface in the outer surface of the body 11 which surface is facing upward when the composite valve 10 is in operation (in the present embodiment, the upper surface 11T), and the charge valve 20 for charging the communication hole 27 with a fluid may be mounted on the mount part 28. This facilitates charging the fluid from the charge valve 20, minimizing the risk of dirt accumulated in the charge valve 20.

In the composite valve 10 according to the present embodiment, the filter 50 is fitted inside the second port 16. The second port 16 is disposed in parallel to the parallel holes 21, 22. This structure implements the downsized composite valve 10 despite the filter 50 being elongated in the extending direction of the second port 16. In the present embodiment, the fit ring 52 is fixed to the other end of the filter body 51, and the filter body 51 is retained by the fit ring 52 to be spaced apart from the inner surface of the second port 16. This creates a clearance between the filter body 51 and the inner surface of the second port 16, facilitating passage of the fluid along the side surface of the filter 50.

In the present description, the term "parallel" refers to not just the strictly parallel state, but also an inclined state by an angle of 5 degrees or less. The term "perpendicular" refers to not just the strictly crossing state by an angle of 90 degrees but refers to the state crossing by an angle falling within a range of 85 degrees to 95 degrees inclusive.

### [Second embodiment]

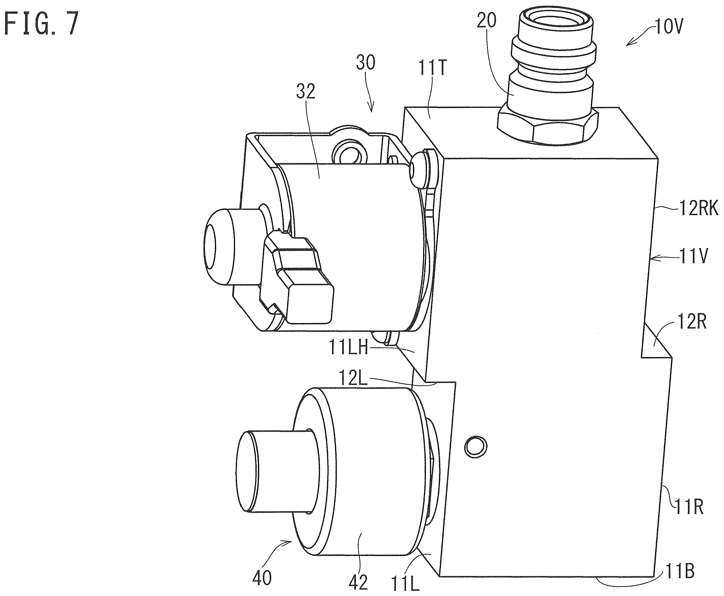

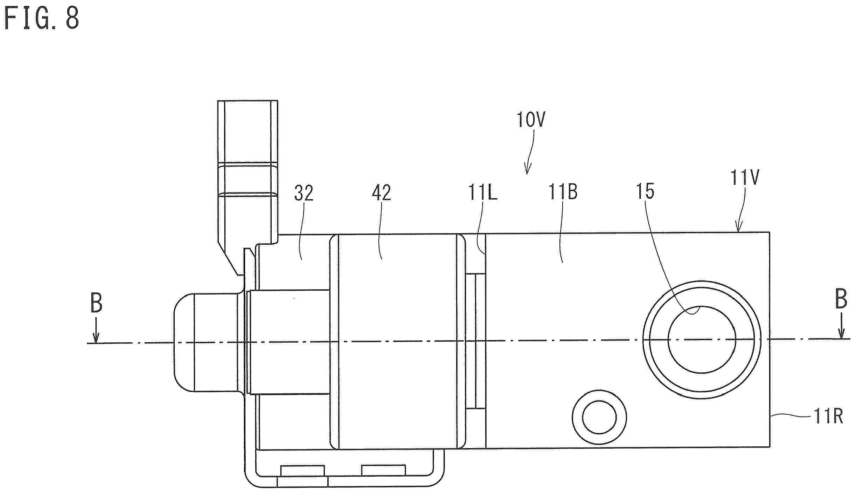

In the following, with reference to FIGS. 7 to 9, a description will be given of a second embodiment. A composite valve 10V according to the present embodiment is different from that according to the first embodiment in the shape of a body 11V and in that the openings of the first parallel hole 21 and the second parallel hole 22 are directed to the same side (the left side). In the body 11V, a step part 12L is provided at an intermediate position in the top-bottom direction of the left surface 11L. Specifically, the step part 12L is disposed between the left end opening of the first parallel hole 21 and the left end opening of the second parallel hole 22. In the left surface 11L, an upper portion relative to the step part 12L protrudes leftward to serve as a protruding surface 11LH. Note that a step part 12R is also formed at an intermediate position in the top-bottom direction of the right surface 11R. In the right surface 11R, an upper portion relative to the step part 12R is recessed to form a recessed surface 12RK. The body 11V may be formed by, for example, cutting a rectangular member to form the step part 12L and the step part 12R and boring a plurality of holes including the parallel hole 21.

In the present embodiment, in accordance with the opening direction of the first parallel hole 21 being different from that in the first embodiment, the first valve port 25, the first valve body 31, the first valve chamber 23, and the first valve body holder 32 are also disposed laterally opposite to those in the first embodiment.

The present embodiment also achieves the effect similar to that achieved by the first embodiment. Here, the solenoid valve 30 and the expansion valve 40 are different from each other in the length by which they are inserted into the first and second parallel holes 21, 22, respectively. Therefore, the first and second parallel holes 21, 22 must be different from each other in the depth from the left end to the first valve port 25 and from the left end to the second valve port 26, respectively. In this point, as in the present embodiment, in the case where the first valve port 25 and the second valve port 26 in the right-left direction are provided using the inner surface of the communication hole 27, the positions of the first valve port 25 and the second valve port 26 are substantially identical to each other. Therefore, when the left surface 11L is flat, it becomes difficult to implement both the solenoid valve 30 and the expansion valve 40. In this point, in the present embodiment, the step part 12L is provided in the left surface 11L between the left end openings of the first and second parallel holes 21, 22. This easily makes a depth from the left end to the first valve port 25 and a depth from the left end to the second valve port 26 different, in the first and second parallel holes 21, 22. Thus, the structure can be provided with the solenoid valve 30 and the expansion valve 40 different from each other in a state where the valve body holders 32, 42 are disposed on the identical side, thereby contributing to downsizing the composite valve 10.

### [Third embodiment]

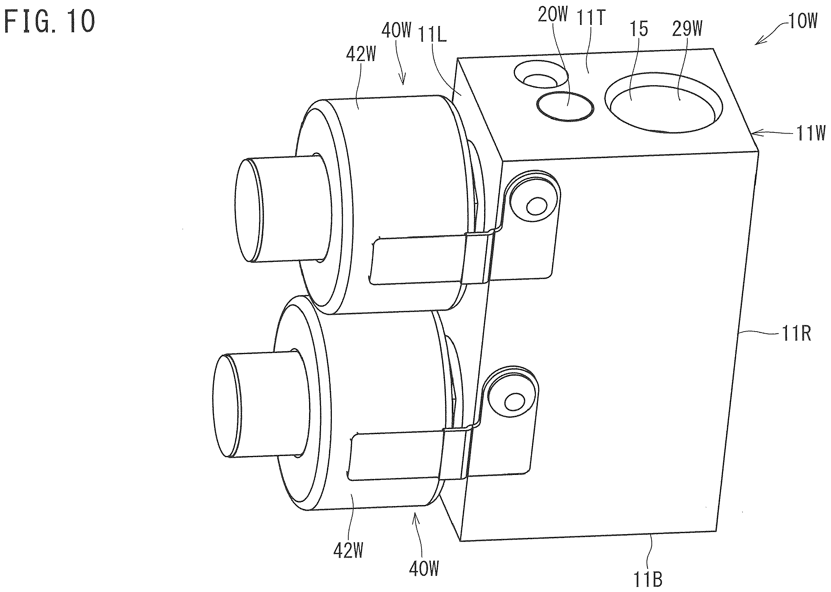

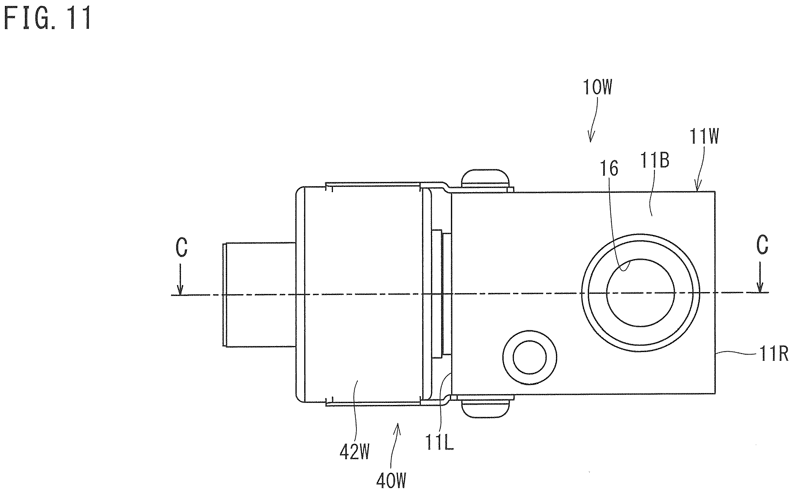

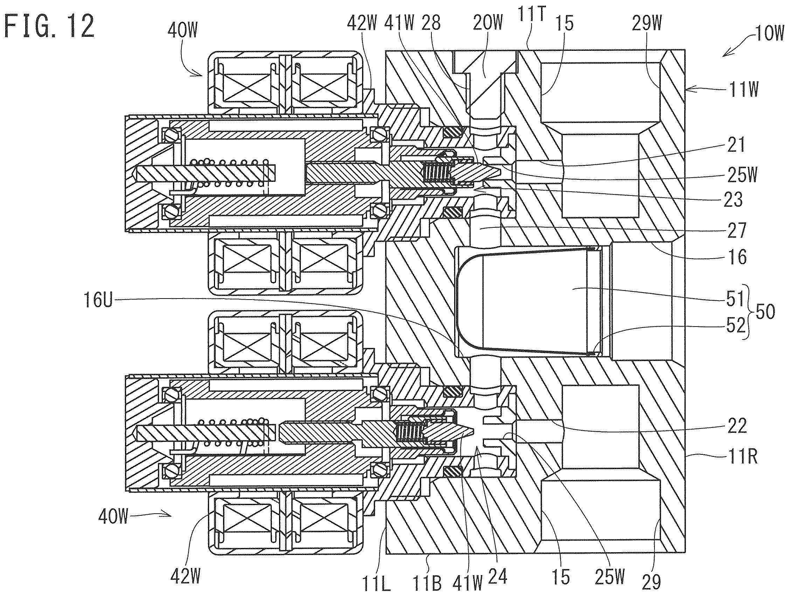

In the following, with reference to FIGS. 10 to 12, a description will be given of a third embodiment. A composite valve 10W according to the present embodiment is different from that according to the second embodiment in including a substantially rectangular parallelepiped-like body 11W and a pair of identical expansion valves 40W as a plurality of valves (that is, a pair of identical valve bodies 41W and valve body holders 42W). As shown in FIG. 12, the third embodiment is different from the second embodiment in the shape of the upper first port 15. Specifically, the upper first port 15 is of the elbow type, similarly to the lower first port 15. In more detail, the right end of the first parallel hole 21 is disposed at an intermediate position in the right-left direction of the body 11W, and an upper perpendicular hole 29W perpendicular to the first parallel hole 21 extends upward from the right end of the first parallel hole 21. The upper first port 15 according to the present embodiment is configured of a right portion in the first parallel hole 21 relative to the first valve port 25 and the upper perpendicular hole 29W.

In each expansion valve 40W according to the present embodiment, similarly to the expansion valve 40 according to the first and second embodiments, the valve body 41W linearly moves to open and close a valve port 25W. In an example in FIG. 12, the upper valve body 41W is disposed at a closed position closing the valve port 25W, and the lower valve body 41W is disposed at an opened position opening the valve port 25W Note that, in the present embodiment, the first parallel hole 21 and the second parallel hole 22, and the upper and lower first ports 15 are disposed to have horizontal symmetry.

In the present embodiment, a sealing plug 20W is mounted on the mount part 28 at the opening in the upper surface 11T for the communication hole 27. Alternatively, a sensor or a check valve may be mounted on the mount part 28.

The present embodiment also achieves the effect similar to that achieved by the first embodiment. In the present embodiment, since a plurality of expansion valves 40W provided to the composite valve 10W are similarly configured, despite the openings of the first and second parallel holes 21, 22 being disposed at the same surface (in the present embodiment, the left surface 11L), the portions where the openings are formed can be flush. This enables the body 11W to have a simple shape such as a rectangle and, therefore, the composite valve 10W is manufactured with ease.

### [Other embodiments]

(1) While the above-described embodiments show the structure in which the composite valve 10 is applied to the refrigerant circuit for a vehicle air conditioner, the use of the composite valve 10 is not particularly limited. The composite valve 10 should just be provided to a fluid circuit. For example, the composite valve 10 may be applied to a heating medium circuit.
(2) In the above-described embodiments, while the first port 15 is the output port, and the second port 16 is the input port, they may be inverted. That is, the first port 15 may be the input port, and the second port 16 may be the output port.
(3) In the above-described embodiments, while the communication hole 27 establishing communication between the first valve chamber 23 and the second valve chamber 24 is perpendicular to the first and second parallel holes 21, 22, the communication hole 27 may be inclined.
(4) In the above-described embodiments, the second port 16 may extend in the direction crossing the first and second parallel holes 21, 22.
(5) In the above-described embodiments, while the first and second parallel holes 21, 22 are parallel to each other, they may extend so as to be inclined relative to each other. In this case, the valve bodies 31, 41 linearly move in the directions inclined relative to each other. In this case, the openings of the first and second parallel holes 21, 22 may be directed to the same side (for example, the left side), or they may be directed oppositely (for example, the left and right sides).
(6) In the above-described embodiments, while the valves in which the valve bodies 31, 41 linearly move (the solenoid valve 30, the expansion valve 40) are provided, they may be replaced by valves in each of which a valve body rotates (for example, rotary valves).
(7) In the above-described embodiments, while the body 11 is disposed such that the first and second parallel holes 21, 22 extend in the right-left direction (the horizontal direction) when the composite valve 10 is in operation, the body 11 may be disposed such that the first and second parallel holes 21, 22 extend in the top-bottom direction (the vertical direction) or extend in the direction inclined relative to the top-bottom direction. Further, in the above-described embodiments, while the body 11 is disposed such that the mount part 28 opens at the upper surface of the body 11, the body 11 may be disposed such that the mount part 28 opens at the lower surface of the body 11 or at the surface facing the horizontal direction of the body 11. Note that, in the case where a charge valve as a check valve is mounted on the mount part 28, the opening of the mount part 28 is preferably disposed at the upper surface.

### DESCRIPTION OF THE REFERENCE NUMERAL

- 10:: composite valve
- 11:: body
- 15:: first port
- 16:: second port
- 21:: first parallel hole
- 22:: second parallel hole
- 27:: communication hole

## Claims

1. A composite valve including a plurality of valves in which valve bodies each linearly move, the composite valve comprising:
a body shared by the plurality of valves;
a plurality of parallel holes bored at a plurality of positions in the body to extend in parallel to each other;
a plurality of valve ports formed by narrowing the plurality of parallel holes at their respective intermediate portions;
a plurality of valve chambers included in one side portion in the plurality of parallel holes relative to the valve ports, to respectively house the valve bodies;
a plurality of first ports including another side portion in the plurality of parallel holes relative to the valve ports, one ends of the first ports opening at an outer surface of the body;
a communication hole crossing the plurality of valve chambers; and
a second port crossing a portion between the valve chambers in the communication hole, one end of the second port opening at the outer surface of the body.

2. The composite valve according to claim 1, further comprising a mount part positioned at an end of the communication hole and opening at the outer surface of the body to mount a sensor or a check valve.

3. The composite valve according to claim 2, wherein
the mount part opens, in the outer surface of the body, at a surface facing upward when the composite valve is in operation, and
on the mount part, the check valve is mounted to change the communication hole with a fluid.

4. The composite valve according to any one of claims 1 to 3, wherein
the second port is disposed in parallel to the plurality of parallel holes, and
a filter is fitted inside the second port.

5. The composite valve according to claim 4, wherein
the filter includes:
a filter body being cylindrical and having one end bottomed and another end opened; and
a fit ring fixed to the other end of the filter body to abut on an inner surface of the second port, so as to retain the filter body in a state of being spaced apart from the inner surface of the second port.

6. The composite valve according to any one of claims 1 to 5, further comprising:
a plurality of outer surface openings, in the plurality of valve chambers, opening at the outer surface of the body on a side opposite to the valve ports; and
a plurality of lid members provided at the plurality of valves to fit inside the outer surface openings, wherein
the plurality of lid members are disposed at a surface of the body directed to a same direction.

7. The composite valve according to claim 6, wherein
the second port is disposed in parallel to the plurality of parallel holes, and
the plurality of first ports include a perpendicular hole extending perpendicularly to the plurality of parallel holes and having one end opened at the outer surface of the body.

8. The composite valve according to any one of claims 1 to 5, further comprising:
a plurality of outer surface openings, in the plurality of valve chambers, opening at the outer surface of the body on a side opposite to the valve ports; and
a plurality of lid members provided at the plurality of valves to fit inside the outer surface openings, wherein
the plurality of lid members are disposed separately at two surfaces of the body facing opposite directions.

9. The composite valve according to any one of claims 6 to 8, wherein
the second port is disposed in parallel to the plurality of parallel holes, and
the plurality of first ports include an elbow-type first port including a perpendicular hole extending perpendicularly to the plurality of parallel holes and having one end opened at the outer surface of the body, and a straight-type first port extending to positions where the plurality of parallel holes open at the outer surface of the body.

10. The composite valve according to claim 9, wherein the communication hole extends from the parallel holes including the straight-type first port to the outer surface of the body, and the communication hole opens at the outer surface of the body, to be closed by a sensor or a check valve.
